# NEUE EUROPÄISCHE PATENTSCHRIFT

(11) **EP 2 770 319 B2**
(45) Veröffentlichungstag und Bekanntmachung des Hinweises auf die Entscheidung über den Einspruch: **26.01.2022**
(45) Hinweis auf die Patenterteilung: 03.02.2016
(21) Anmeldenummer: 13156530.1
(22) Anmeldetag: 25.02.2013
(51) Int. Cl.: G01N 21/3504, G01N 21/17

(54) **Gasmessgerät**
Gas measuring device
Appareil de mesure de gaz

(43) Veröffentlichungstag der Anmeldung: 27.08.2014
(73) Patentinhaber: SICK AG, 79183 Waldkirch (DE)
(72) Erfinder: Disch, Rolf, 79356 Eichstetten (DE)

(56) Entgegenhaltungen:
- WO-A1-93/09422
- WO-A1-2007/054751
- US-A- 4 457 162
- US-A- 5 357 340
- US-A1- 2003 209 669
- US-A1- 2004 145 741
- KOSKINEN V ET AL: "Cantilever enhanced photoacoustic detection of carbon dioxide using a tunable diode laser source", APPLIED PHYSICS B ; LASERS AND OPTICS, SPRINGER, BERLIN, DE, Bd. 86, Nr. 3, 23. Januar 2007 (2007-01-23), Seiten 451-454, XP019490580, ISSN: 1432-0649, DOI: 10.1007/S00340-006-2560-Z
- UOTILA ET AL: "Comparison of infrared sources for a differential photoacoustic gas detection system", INFRARED PHYSICS AND TECHNOLOGY, ELSEVIER SCIENCE, GB, Bd. 51, Nr. 2, 1. Oktober 2007 (2007-10-01), Seiten 122-130, XP022278516, ISSN: 1350-4495, DOI: 10.1016/J.INFRARED.2007.05.001

## Beschreibung

Die Erfindung betrifft ein Gasmessgerät nach dem Oberbegriff von Anspruch 1.

Aus der DE 10 2005 049 522 B3 ist eine Gassensoranordnung bekannt mit einer Strahlungsvorrichtung, einem Gasmessraum, einer Detektorvorrichtung und einer Auswertevorrichtung, wobei die Auswertevorrichtung die Strahlungsvorrichtung steuert, die Detektorsignale aufzeichnet und auswertet und die Messgaskonzentration abhängig vom Ausgangssignal der Detektorvorrichtung bestimmt. Die Strahlungsvorrichtung weist mindestens zwei Messstrahlungsquellen und mindestens eine Referenzstrahlungsquelle auf, welche jeweils die Strahlung in mindestens einem Absorptionsband des zu detektierenden Gases, dem Messband, sowie die Strahlung in mindestens einem durch das Messgas nicht absorbierenden spektralen Band, dem Referenzband, ausstrahlen. Die Detektorvorrichtung ist so aufgebaut, dass sie die Strahlung nach deren Durchgang durch den Gasmessraum in einem Mess- bzw. in einem Referenzband jeweils räumlich und/oder zeitlich getrennt unabhängig empfangen kann, wobei die Auswertevorrichtung die Strahlungsquellen nach einem bestimmten Steuerungsalgorithmus betreibt und die Ausgangssignale der Detektorvorrichtung im Mess- und/oder im Referenzband beim Einschalten einer der Strahlungsquellen oder beim Strahlungsquellenvergleich feststellt und vergleicht, eine eventuelle Halterung der Gassensoranordnung gegebenenfalls kompensiert und die Messgaskonzentration bestimmt.

Bekannte Infrarotgassensoren weisen beispielsweise eine breitbandige Strahlungsquelle, eine Absorptionsstrecke bzw. einen Gasmessraum, ein wellenlängenselektivierendes Element, z. B. ein optisches Bandpassfilter, wie ein Interferenzfilter, ein Fabry-Perot-Interferometer oder ein Gitter und einen Strahlungsdetektor, beispielsweise einen pyroelektrischen Detektor, einen Halbleiterdetektor oder einen thermophilen Detektor auf. Die Abschwächung der am Detektor ankommenden Strahlung aufgrund der Absorption durch die Gasmoleküle ist ein Maß für die Konzentration des bei der eingestellten Wellenlänge absorbierenden Gases. Das Wellenlängen selektierende Element kann vor und/oder hinter dem Gasmessraum angeordnet werden.

Der Einsatz einer wellenlängenselektiven Strahlungsquelle wie z. B. einer LED oder eines Lasers in Kombination mit nichtwellenlängenselektiven Strahlungsempfängern ist ebenfalls bekannt.

Die Strahlungsabsorption durch Gasmoleküle im Infrarotbereich wird auch in photoakustischen Gassensoren benutzt. Die Strahlungsabsorption führt zur Erwärmung des Gases im Gasmessraum. Die daraus resultierende Druckänderung wird mittels eines akustischen Detektors wie z.B. eines Mikrofons oder mittels eines Drucksensors registriert.

Die US 2004/0145741A1 offenbart eine Gasmesszelle mit einem ersten Filter und einem zweiten Filter, welches als Fabry-Perot-Filter ausgebildet ist. Das zweite Filter kann über einen Modulator beeinflusst werden, so dass die Wellenlänge und eine Lichtintensität einstellbar list.

Eine Veröffentlichung von Koskinen et al. mit dem Titel 'Cantilever enhanced photoacoustic detection of carbon dioxide using a tunable diode laser source' Appl. Phys. B86, Seiten 451-454, 2007; offenbart eine photoakustische Messzelle.

Die US 4 457 162 offenbart eine photoakustische Messzelle mit einem Bandfilter und einem Chopper.

Eine Veröffentlichung von Uotila mit dem Titel 'Comparison of infrared sources for a differential photoacoustic gas detection system' Infrared Physics & Technology, Band 51, Seiten 122-130, 2007, offenbart eine photoakustische Messzelle.

Die WO 2007/054751A1 offenbart ebenfalls eine photoakustische Messzelle.
Eine Veröffentlichung von V. Koskinen vom 11.06.2007 "Cantilever Enhanced Photoacoustik Spectroscopy using a diode laser source" offenbart eine photoakustische Messzelle.

Aufgabe der vorliegenden Erfindung ist es, ein Gasmessgerät bereitzustellen, welches idealerweise ohne makroskopisch mechanisch bewegliche Teile auskommt und die zu untersuchende Wellenlänge bzw. das zu untersuchende Frequenzspektrum kontinuierlich veränderbar ist. Weiter soll eine Messgeschwindigkeit erhöht werden. Eine weitere Aufgabe besteht darin ein Gasmessgerät zur Verfügung zu stellen, das geeignet ist, Konzentrationen einer Vielzahl von Messgasen zu bestimmen ohne dass Teile, wie Filter mechanisch ausgetauscht werden müssen.

Die Aufgabe wird gelöst durch ein Gasmessgerät gemäß Anspruch 1.

Da das Gasmessgerät nach der Erfindung nahezu ohne makroskopisch mechanisch bewegte Teile auskommt, ist diese wenig störanfällig. Mechanisch bewegte Teile sind durch Reibung einem Verschleiß unterworfen, der dazu führt, dass das Gasmessgerät gewartet werden muss. Durch die fehlenden mechanisch bewegten Teile ist das Gasmessgerät robuster und preiswerter ausgebildet.

Das Fabry-Perot-Filter besteht aus einem optischen Resonator, der aus zwei teildurchlässigen Spiegeln gebildet wird. Ein eintreffender Lichtstrahl wird nur dann durch das

Fabry-Perot-Filter transmittiert, wenn er dessen Resonanzbedingungen entspricht. Andere Spektralbereiche werden nahezu vollständig ausgelöscht. Dies geschieht durch konstruktive bzw. destruktive Interferenz der Teilstrahlen. Das Fabry-Perot-Filter wirkt dadurch als optisches Filter. Durch mikromechanische Verschiebung der Spiegel kann die Wellenlänge verändert werden, welche durch das Fabry-Perot-Filter hindurch treten soll.

Durch die Verwendung des Fabry-Perot-Filters kann die transmittierte Wellenlänge des Lichtstrahles veränderlich eingestellt werden, so dass die photoakustische Messzelle mit Licht veränderlicher Wellenlänge beaufschlagbar ist, wodurch unterschiedliche Absorptionsspektren von unterschiedlichen Gasen eines Gasgemisches nacheinander eingestellt werden können. Die spektralen Wellenlängen, bei denen die verschiedenen Gase eine Absorption aufweisen, können gemäß der Erfindung auch kontinuierlich durchgestimmt werden.

Die veränderlichen Wellenlängen des Lichtstrahles können durch das Fabry-Perot-Filter sehr schnell, nämlich im Bereich von wenigen Sekunden, insbesondere im Bereich von wenigen Millisekunden eingestellt werden.

Das Fabry-Perot-Filter ist beispielsweise als piezogesteuertes Fabry-Perot-Filter ausgebildet. Das Fabry-Perot-Filter ist dabei als Mikro-Elektro-Mechanisches-System aufgebaut. Solche Systeme sind auch unter der Abkürzung MEMS bekannt. Das erfindungsgemäß eingesetzte Fabry-Perot-Filter kann beispielsweise elektrostatisch oder piezoelektrisch angesteuert werden.

Das Breitbandfilter ist notwendig, um höhere Ordnungen der Wellenlängen auszublenden. Somit ist es möglich, die Messung nur für eine einzige, nämlich die erste Ordnung eines Absorptionsspektrums zu begrenzen, wodurch eine präzise und genaue Bestimmung des zu messenden Gases ermöglicht wird.

In Weiterbildung der Erfindung ist nur eine einzige Lichtquelle vorgesehen. Dadurch ist das Gasmessgerät günstiger herstellbar.

In Weiterbildung weist die photoakustische Messzelle einen Schwingbalken und ein Interferometer zur Messung der Auslenkung des Schwingbalkens auf. Durch die Absorption der Lichtstrahlen durch das Gas bei einem bestimmten Absorptionsspektrum wird das Gas in einem sehr kurzen Zeitraum erwärmt, wodurch eine impulsartige Druckänderung des Gases in der photoakustischen Messzelle erfolgt. Diese Druckänderung führt zu einer Auslenkung des Schwingbalkens. Der Schwingbalken, welcher auch als Cantilever bezeichnet wird, besteht beispielsweise aus einer Siliziummembran. Der Schwingbalken dient als optisches Element für ein Interferometer. Mit Hilfe des Interferometers kann eine Auslenkung des Schwingbalkens auf Basis der Interferenzmessung sehr präzise bestimmt werden.

Gemäß einer weiteren bevorzugten Ausführungsform ist zwischen der Lichtquelle und der photoakustischen Messzelle ein optischer Pulsformer vorgesehen. Durch den optischen Pulsformer wird das Licht der Lichtquelle moduliert. Besonders bevorzugt wird durch den optischen Pulsformer pulsiertes Licht erzeugt, wodurch die Absorption in dem Messgas zyklisch erfolgt, wodurch ein Schwingverhalten des Schwingbalkens verbessert wird, insbesondere wenn ein Resonanzverhalten durch den Pulsformer erreicht wird. Der optische Pulsformer wird im einfachsten Fall durch eine drehbare Schlitz- oder Lochblende verwirklicht, wodurch eine zyklische Unterbrechung des Lichtstrahles erreicht wird. Derartige optische Pulsformer werden auch als Chopper bezeichnet.

Besonders bevorzugt bildet jedoch das Fabry-Perot-Filter selbst den optischen Pulsformer. D. h. das Fabry-Perot-Filter wird zum einem wie bereits erwähnt so eingestellt, dass nur eine bestimmte Wellenlänge des Lichtes hindurch treten kann. Weiter wird das Fabry-Perot-Filter derart zyklisch angesteuert, dass das Licht nur zu bestimmten Zeiten im Zyklus das Fabry-Perot-Filter durchdringen kann, wodurch pulsförmiges Licht am Ausgang des Fabry-Perot-Filters entsteht. Dadurch kommt dem Fabry-Perot-Filter erfindungsgemäß eine Doppelfunktion zu, wodurch die Vorrichtung deutlich vereinfacht wird. Das Fabry-Perot-Filter wird über eine Steuereinheit angesteuert, mit der eine gewünschte transmittierte Wellenlänge des Fabry-Perot-Filters und die Frequenz sowie das Puls-Pausenverhältnis, mit der das Licht durch das Fabry-Perot-Filter unterbrochen wird, eingestellt wird.

Gemäß der Erfindung ist zwischen der Lichtquelle und der photoakustischen Messzelle ein dichroitischer Strahlteiler angeordnet, wobei ein erster Lichtanteil, welcher den Strahlteiler durchdringt, direkt in die photoakustische Messzelle fällt und der vom Strahlteiler reflektierte Lichtanteil über Umlenkmittel in die photoakustische Messzelle geführt ist. Vor dem Strahlteiler ist das Fabry-Perot-Filter angeordnet, um eine gewünschte Wellenlänge zu selektieren, bzw. um das Licht in der Intensität zu modulieren. Dadurch ist es möglich, mehrere Spektralkomponenten zu messen, obwohl der dazu notwendige Spektralbereich so groß ist, dass der freie spektrale Bereich des Fabry-Perot-Filters zunächst nicht ausreicht. Durch den dichroitischen Strahlteiler werden jedoch nun mehrere Ordnungen, beispielsweise die erste und zweite oder die erste und dritte Ordnung des einzigen Fabry-Perot-Filters ausgenutzt und über den Strahlteiler und mittels Umlenkmitteln, welche als Umlenkspiegel oder Umlenkprismen ausgeführt sein können, der einzigen photoaktustischen Messzelle zugeführt. Zur Modulation der Lichtstrahlen nach dem dichroitischen Strahlteiler ist jeweils ein optischer Pulsformer angeordnet. Der optische Pulsformer kann beispielsweise auch durch ein Chopper realisiert werden, wobei der Chopper eine unterschiedliche Schlitzanzahl auf zwei verschiedenen Radien für die unterschiedlichen Lichtstrahlen aufweist.

In einer weiteren besonderen Ausführungsform ist zwischen einem Umlenkmittel und der photoakustischen Messzelle ein zweites Fabry-Perot-Filter angeordnet. Dadurch ist es nun möglich, dass jeder Lichtstrahl des dichroitischen Strahlteilers von je einem Fabry-Perot-Filter beeinflussbar ist. In jedem der beiden Lichtstrahlen kann die exakte Wellenlänge durch das jeweilige Fabry-Perot-Filter eingestellt werden, und zusätzlich kann die Lichtmodulation für jeden Lichtstrahl unabhängig voneinander durch das jeweilige Fabry-Perot-Filter eingestellt werden. Gemäß dieser Weiterbildung entfällt ein zusätzlicher optischer Pulsformer, da das jeweilige Fabry-Perot-Filter die Funktion des optischen Pulsformers übernimmt.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Gasmessgerät;
- Figur 2: ein Gasmessgerät;
- Figur 3: eine beispielhafte Messkonfiguration für verschiedene Messgase;
- Figur 4: ein Gasmessgerät gemäß einem ersten Ausführungsbeispiel;
- Figur 5: eine qualitative Darstellung von Absorptionsspektren;
- Figur 6: ein Gasmessgerät gemäß einem zweiten Ausführungsbeispiel;
- Figur 7: eine qualitative Darstellung von Absorptionsspektren.

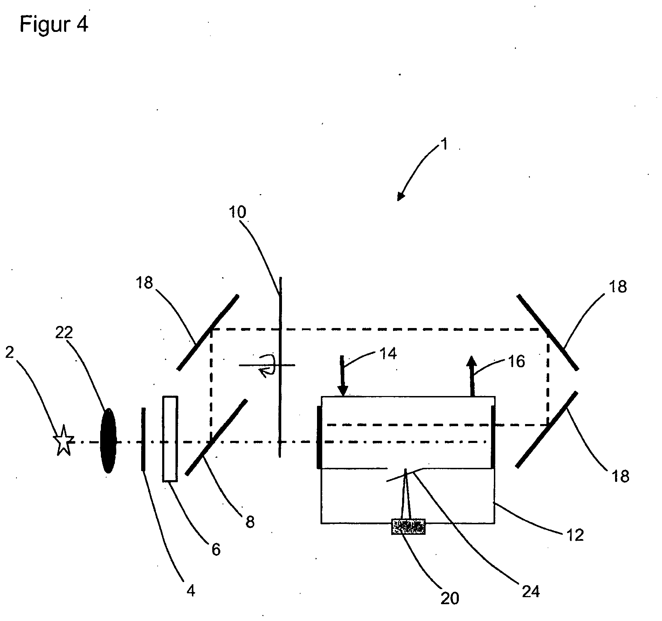

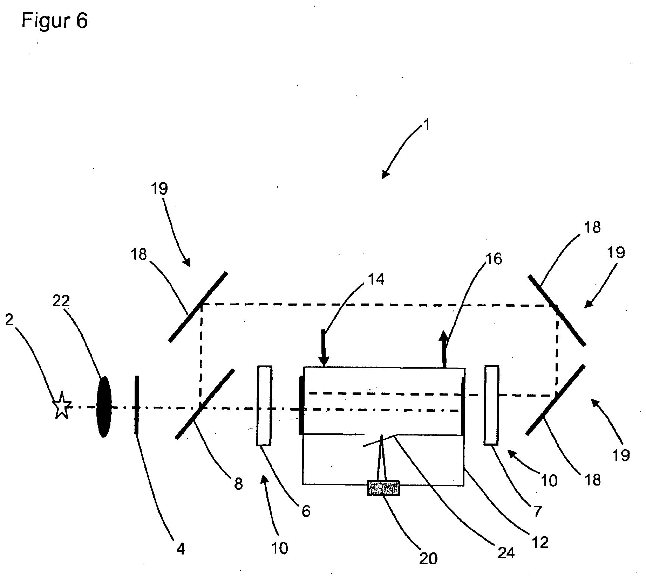

In den nachfolgenden Figuren 4 und 6 sind verschiedene Ausführungsbeispiele dargestellt, in denen identische Teile mit identischen Bezugszeichen versehen sind. Merkmale der unterschiedlichen Ausführungsbeispiele sind miteinander kombinierbar.

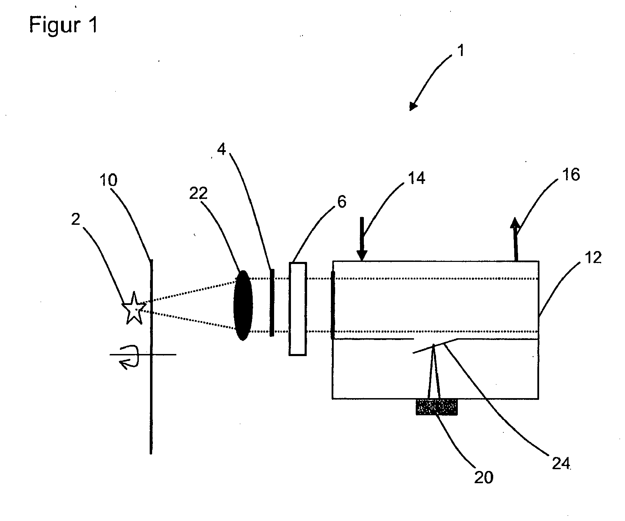

Figur 1 zeigt ein Gasmessgerät 1 zur Messung der Konzentration mehrerer Gaskomponenten mittels Absorptionsmessung mit einer Lichtquelle 2 für infrarote Strahlung (thermischen Strahler). Weiter ist eine Optik 22 zur Bündelung des Lichts der Lichtquelle 2, ein Bandpassfilter 4 und eine photoakustische Messzelle 12 zur Messung der Gaskonzentrationen mehrerer Komponenten vorgesehen. Zur Selektion einer Wellenlänge, um ein Absorptionsspektrum aufzunehmen, ist zusätzlich zum Bandpassfilter und bevorzugt zwischen dem Bandpassfilter 4 und der photoakustischen Messzelle 12 ein Fabry-Perot-Filter 6 vorgesehen. Die photoakustische Messzelle 12 weist einen Gaseinlass 14 und einen Gasauslass 16 auf.

Dabei sendet die Lichtquelle 2 infrarotes Licht aus (thermischer Strahler). Die photoakustische Messzelle 12 ist mit einem zu untersuchenden Gas befüllt. Nur wenn Gase im Messvolumen vorhanden sind, die bei den ausgewählten spektralen Wellenlängen absorbieren, wird infrarote Strahlung absorbiert. Dies führt zu einer Erwärmung und damit zu einer Druckerhöhung in der Messzelle. Diese Druckerhöhung führt zu einer Auslenkung eines Schwingbalkens 24, welcher als Membran, insbesondere als Siliziummembran ausgebildet ist. Eine solche Membran wird wie bereits erwähnt auch als Cantilever bezeichnet. Die Auslenkung der Membran wird wiederum durch ein Interferometer 20 sehr genau bestimmt, wobei die Auslenkung proportional zur Konzentration des Messgases im Messvolumen der photoakustischen Messzelle 12 ist.

Mit Hilfe eines Fabry-Perot-Filters 6, insbesondere eines piezogesteuerten Fabry-Perot-Filters 6 oder eines Fabry-Perot-Filters 6 in mikromechanischer Bauweise, welches elektrostatisch oder piezoelektrisch angesteuert wird, werden die spektralen Positionen der Gaskomponenten ohne makroskopisch bewegte mechanische Komponenten eingestellt und ggf. auch kontinuierlich durchgestimmt. Die Veränderung und Einstellung der spektralen Wellenlängen erfolgt in Sekunden bis wenigen Millisekunden.
Um Interferenzen höherer Ordnungen auszublenden, ist ein Bandpassfilter 4 vorgesehen. Gemäß Figur 1 können Wellenlängen von 4,3 µm bis 7,4 µm eingestellt werden, um die Gaskomponenten CO, NO, SO2, NO2, N2O, CO2 und H2O mittels nur einem einzigen Fabry-Perot-Filter 6 zu messen. Beispielsweise können mit dem Aufbau gemäß Figur 1 im Wellenlängenbereich von 3 µm bis 3,8 µm viele verschiedene Kohlenwasserstoffe gemessen werden. Es können alle Gaskomponenten gemessen werden, deren Absorptionsbanden sich innerhalb des eingestellten freien spektralen Bereichs des Fabry-Perot-Filters 6 befinden. Das zusätzliche Messen und Hinzufügen weiterer Gaskomponenten ist sehr einfach möglich, wenn diese innerhalb des Fabry-Perot-Filters 6 Absorptionsbanden aufweisen.

Die Intensität des Lichts wird mit einem optischen Pulsformer 10, insbesondere einer drehbaren Schlitzscheibe, auch Chopper genannt, moduliert. Dann wird das Gas in der photoakustischen Messzelle 12 entsprechend der Modulation absorbieren, was zur periodischen Auslenkung des Schwingbalkens 24 führt. Die Schwingung des Schwingbalkens 24 wird über das Interferometer 20 bestimmt, wobei die Auslenkung, wie oben beschrieben, ein Maß für die Konzentration ist.

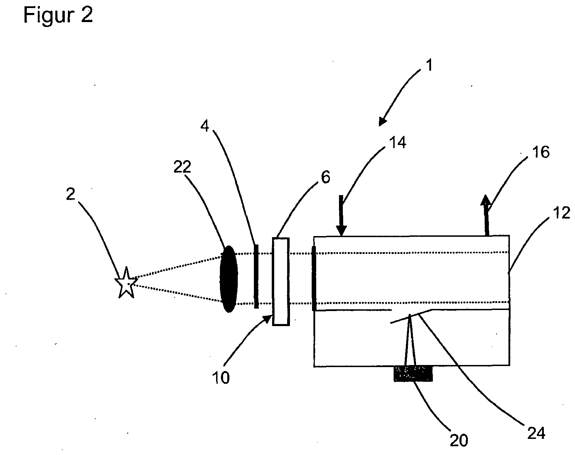

Figur 2 zeigt einen ähnlichen Aufbau wie Figur 1 mit dem Unterschied, dass der optische Pulsformer 10 nicht als eigenständige Baugruppe vorgesehen ist. In diesem Fall wird die Transmissionsspitze des Fabry-Perot-Filters 6 periodisch außerhalb des Bandpassfilters 4 verschoben, ohne dass eine Transmission für eine höhere Ordnung erscheint, womit durch das Fabry-Perot-Filter 6 in Kombination mit dem Bandpassfilter 4 die Funktion des optischen Pulsformers 10 nachgebildet ist. Dadurch kann erfindungsgemäß das Fabry-Perot-Filter 6 eine Doppelfunktion erfüllen, nämlich die spektrale Selektion einzelner Wellenlängenbereiche und zusätzlich die Funktion des optischen Pulsformers 10 und es kann der mechanische Chopper entfallen.

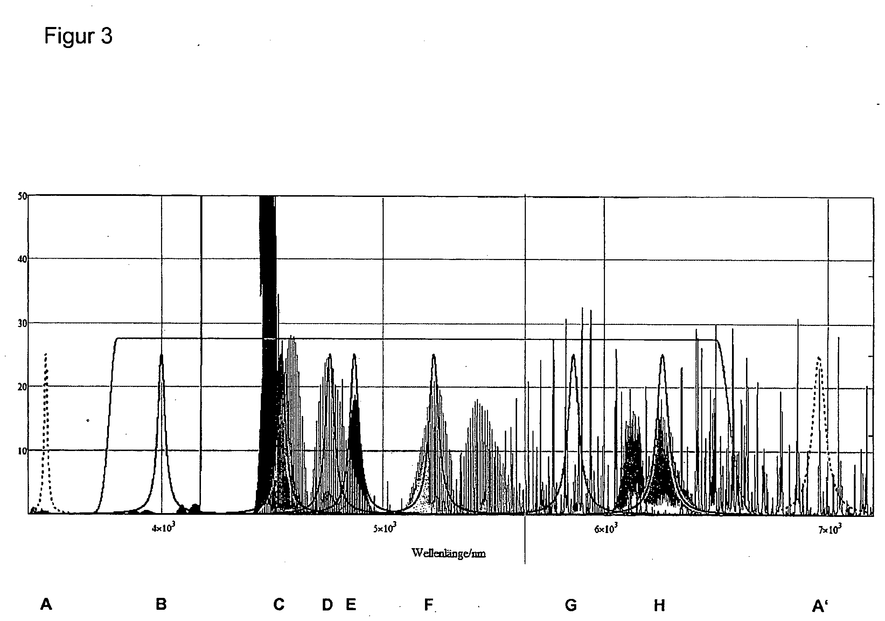

Figur 3 zeigt exemplarisch eine mögliche Messkonfiguration für die Komponenten N2O, CO, NO, NO2, CO2, H2O, also die Absorptionsspektren dieser Komponenten in einem gemeinsamen Bild. Die einzelnen Absorptionsspektren, die durch dünne Striche dargestellt sind, sind beliebig skaliert. Die dargestellten Absorptionsbanden gehören zu den genannten Komponenten, wobei die Banden sich teilweise auch überlappen. Mit fetten Linien und Bezugszeichen A bis H und A' sind die Spektralpositionen der ebenfalls idealisierten Fabry-Perot-Filter-Transmissionsspitzen dargestellt, die zur Messung der Komponenten sinnvoll sind. Position A ist eine Dunkelstellung. Position D liegt über einer CO Absorption, Position F über einer NO Absorption usw. Eine mögliche Messstrategie wäre wie folgt: Es werden nacheinander, beispielsweise in einem zeitlichen Sekundenabstand, bzw. -raster die Positionen B bis H eingestellt und damit die jeweils passende Wellenlängen selektiert, um die einzelnen Komponenten zu vermessen. Die zur Messung notwendige Pulsformung erfolgt durch Anfahren der Position A oder A' im zeitlichen Millisekundenabstand bzw. -raster, wodurch optische Pulse erzeugt werden und die Messung nach dem oben beschriebenen Prinzip erfolgen kann.

Figur 4 zeigt ein erstes Ausführungsbeispiel mit der Lichtquelle 2 und nachgeordneter Optik 22 zur Strahlformung. Nach der Optik 22 ist das Bandpassfilter 4 angeordnet. Das durch das Bandpassfilter 4 gefilterte Licht durchdringt weiter das Fabry-Perot-Filter 6, welches hier wieder dazu dient, eine einstellbare Wellenlänge zu transmittieren. Das durch das Fabry-Perot-Filter 6 gefilterte Licht trifft dann auf einen dichroitischen Strahlteiler 8, welcher den Lichtstrahl in zwei unterschiedlichen Wellenlängen aufteilt. Ein erster, den dichroitischen Strahlteiler 8 durchdringender Lichtstrahl wird von einem optischen Pulsformer 10 (Chopper) moduliert, bevor dieser Lichtstrahl dann in die photoakustische Messzelle 12 gelangt. Der zweite Lichtstrahl, der von dem dichroitischen Strahlteiler 8 reflektiert wird, gelangt über drei Umlenkmittel 18, welche den Lichtstrahl jeweils um 90 Grad umlenken, ebenfalls in die photoakustische Messzelle 12. Die Umlenkmittel 18 können beispielsweise als Umlenkspiegel 19 oder als Umlenkprisma ausgebildet sein.

Gemäß Figur 4 ist es möglich mehrere Spektralkomponenten zu messen, obwohl der dazu notwendige Spektralbereich so groß ist, dass der freie spektrale Bereich des Fabry-Perot-Filters 6 eigentlich nicht ausreicht. Durch den dichroitischen Strahlteiler 8 werden jetzt mehrere Ordnungen, beispielsweise die erste und zweite oder die erste und dritte Ordnung des Fabry-Perot-Filters 6 ausgenutzt. Damit die Messung mit nur einer einzigen photoakustischen Messzelle 12 durchgeführt werden kann, ist der Aufbau gemäß Figur 4 vorgesehen. Mit Hilfe des dichroitischen Strahlteilers 8 werden die beiden Frequenzspektren, bzw. Wellenlängenspektren der unterschiedlichen Ordnungen separiert, beispielsweise von 2,9µm bis 4.2µm für einen kurzwelligeren und von 4,4µm bis 7,7µm für einen langwelligeren optischen Pfad. Abhängig von der Güte des dichroitischen Strahlteilers 8 kann auch hier noch ein Bandpassfilter 4 erforderlich sein.

Um die beiden Spektralbereiche auf den beiden optischen Wegen auch messtechnisch mit dem einzigen Nächweisgerät (Messzelle 12) trennen zu können, ist ein (anderer) optischer Pulsformer 10 vorgesehen, der wieder als Chopper ausgebildet ist, aber jetzt unterschiedliche Schlitzanzahl auf zwei unterschiedlichen Radien aufweist. So kann z. B. der langwelligere Teil mit beispielsweise 1 kHz und der kurzwelligere Teil mit größer 2 kHz moduliert werden. Das Fabry-Perot-Filter 6 kann beispielsweise neben den genannten Ausführungen, auch kontinuierlich durchgestimmt werden. Die Signalauswertung erfolgt mit einer Auswerteeinheit wie bereits zu den Figuren 1 und 2 beschrieben durch den Schwingbalken 24 und das Interferometer 20 mittels einer Lock-In Technik.

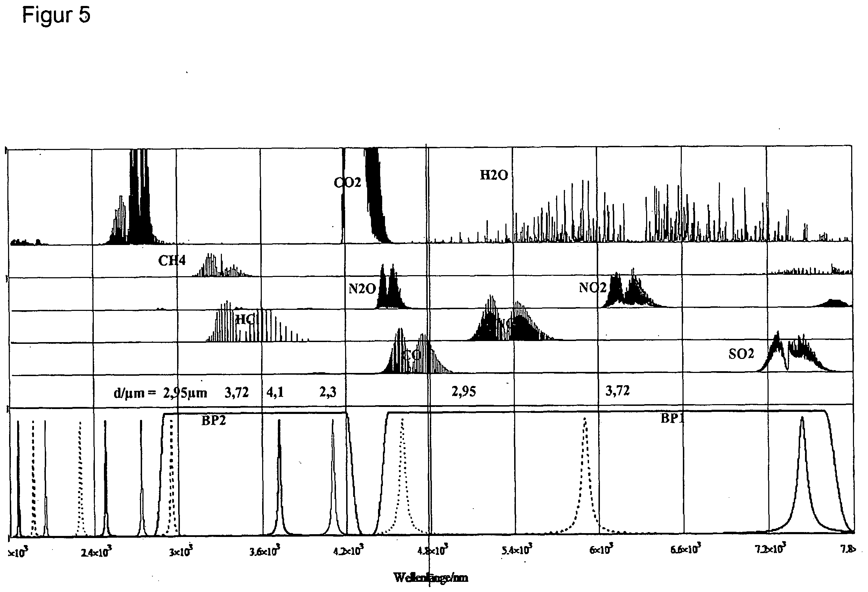

In Figur 5 sind die spektralen Verhältnisse dargestellt, nämlich die qualitativen Absorptionsspektren, für eine Messung mit einer Vorrichtung gemäß Figur 4, wobei im Unterschied zu Figur 4 zwei Bandpässe BP1 und BP2 eingesetzt werden. Die beiden Bandpässe BP1 und BP2 sind so gewählt, dass nicht mehrere Ordnungen in den einzelnen Bandpassfiltern erscheinen. Zur besseren Übersicht sind die einzelnen Absorptionsspektren der verschiedenen Gase mit Offsets versehen. In dieser Konfiguration können im langwelligen Bereich die Komponenten CO, NO, NO2, S02, CO2 sowie H2O bei einer Lock-In Frequenz f1 und im kurzwelligen Bereich viele Kohlenwasserstoffe, beispielhaft ist hier CH4 gezeigt, sowie HCl bei einer Lock-In Frequenz f2 gemessen werden. Bei etwa 4µm wird das Nullpunktsignal gemessen, da bei dieser Wellenlänge Absorptionen vernachlässigbar sind.

Im unteren Grafikbereich sind einige Transmissionskurven des Fabry-Perot-Filters 6 für verschiedene Abstände der Spiegel des Fabry-Perot-Filters gezeigt. Insbesondere wenn die HO-Absorption bei der modulierten Infraratstrahlung zu groß wird, kann auch zwischen 1800 nm und 2200 nm sowohl H2O also Wasser als auch CO2 gemessen werde indem hierfür die dritte Ordnung verwendet wird.

In einer zweiten Ausführungsform gemäß Figur 6 ist zwischen einem Umlenkmittel 18 bzw. einem Umlenkspiegel 19 und der photoakustischen Messzelle 12 ein zweites Fabry-Perot-Filter 7 angeordnet. Dadurch ist es nun möglich, dass jeder Teillichtstrahl des dichroitischen Strahlteilers 8 von je einem Fabry-Perot-Filter 6 bzw. 7 beeinflussbar ist. Diese Anordnung ist dann sinnvoll, wenn die Spektralbereiche nicht optimal separiert werden können.

Figur 6 zeigt die Lichtquelle 2 und die nachgeordnete Optik 22 zur Strahlformung. Nach der Optik 22 ist der Bandpassfilter 4 angeordnet. Das durch das Bandpassfilter 4 gefilterte Licht trifft weiter auf den dichroitischen Strahlteiler 8, welcher den Lichtstrahl in zwei Teilstrahlen mit jeweils unterschiedlichen Wellenlängenbereichen aufteilt. Der durch den dichroitischen Strahlteiler 8 transmittierte Teillichtstrahl trifft auf das erstes Fabry-Perot-Filter 6, welches dazu dient, eine einstellbare Wellenlänge zu transmittieren. Der transmittierte Teillichtstrahl wird durch das erste Fabry-Perot-Filter 6 als optischer Pulsformer 10 auch moduliert, bevor dieser Teillichtstrahl in die photoakustische Messzelle 12 gelangt. Der zweite Teillichtstrahl, der von dem dichroitischen Strahlteiler reflektiert wird, gelangt über drei Umlenkmittel 18, die den Lichtstrahl jeweils um 90 Grad umlenken, auf das zweite Fabry-Perot-Filter 7, welches eine zweite Wellenlänge einstellt. Der reflektierte und umgelenkte Teillichtstrahl, welcher das zweite Fabry-Perot-Filter 7 durchdringt, wird von dem zweiten Fabry-Perot-Filter 7 als optischer Pulsformer 10 ebenfalls moduliert, bevor dieser Teillichtstrahl dann ebenfalls in die einzige photoakustische Messzelle 12 gelangt. Die Umlenkmittel 18 können beispielsweise als Umlenkspiegel 19 oder als Umlenkprisma ausgebildet sein.

Es wird wiederum nur eine einzige photoakustische Messzelle 12 verwendet. Weiter wird auf einen zusätzlichen mechanischen optischen Pulsformer, also einen Chopper verzichtet. Durch die beiden vorgesehenen Fabry-Perot-Filter 6 bzw. 7 werden schrittweise oder kontinuierlich die einzelnen Spektralpositionen eingestellt und zusätzlich mit unterschiedlichen Frequenzen außerhalb des Spektralbereichs des zugeordneten Bandpassfilters 4 verschoben, um auch hier gleichzeitig eine Wellenlängenselektion sowie die Funktion des optischen Pulsformers zu realisieren. Abhängig von der Güte des dichroitischen Strahlteilers 8 kann auch hier noch ein Bandpassfilter 4 zwischen dem Strahlteiler 8 und der Lichtquelle 2 erforderlich sein

Die Signalauswertung bzw. Signaltrennung erfolgt auch in diesem Ausführungsbeispiel mittels des Schwingbalkens 24, der photoakustischen Messzelle 12 und dem Interferometer 20 wie bereits beschrieben.

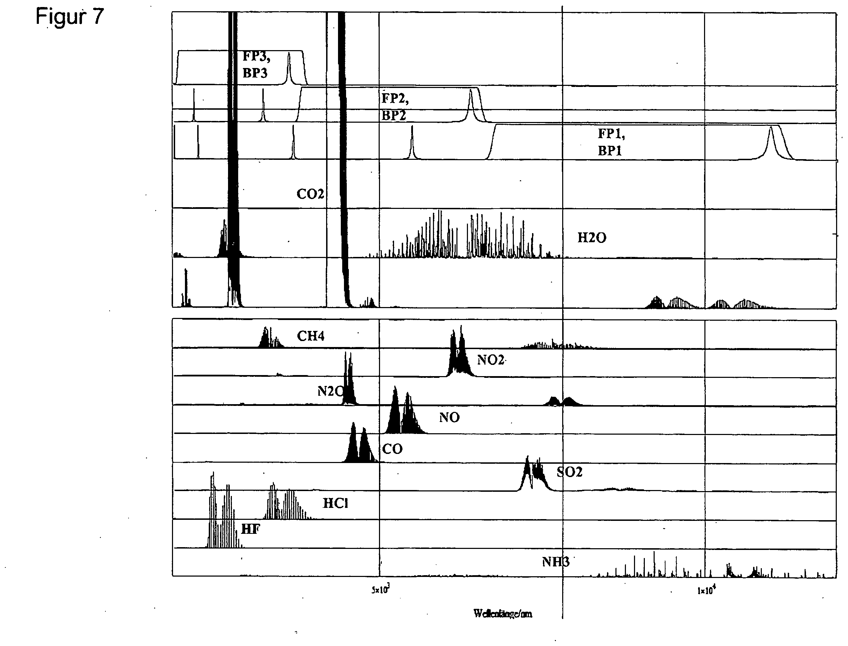

In Figur 7 ist beispielhaft dargestellt, in welcher Konfiguration welche Gaskomponenten mit der Vorrichtung aus Figur 6 gemessen werden können. Zur besseren Übersicht sind die einzelnen Absorptionsspektren der Gase mit Offsets versehen. Die Gaskomponenten NH3, CO2, S02, H2O können beispielsweise mit einem der Fabry-Perot-Filter in einem langwelligen Bereich FP1, sowie N2O, CO, NO, NO2, CO2 und H2O in einem kurzwelligen Bereich FP2 gemessen werden. In einem Wellenlängenbereich FP3 können die Komponenten HF und HCl gemessen werden. Es sind auch andere Kombinationen vorgesehen, die in dieser Erfindung mit umfasst sind. Wichtig ist, dass der freie Spektralbereich der einzelnen Fabry-Perot-Filter größer als der abzutastende spektrale Bereich ist. Die Bandpassfilter sind in den Ausführungsbeispielen idealisiert mit Durchlassbereichen BP1, BP2 und BP3 dargestellt. Diese werden so eingestellt, dass immer nur eine Ordnung detektiert wird. Diese werden an die tatsächlichen erreichbaren Reflexions- bzw. Transmissionseigenschaften der Fabry-Perot-Spiegel angepasst.

### Bezugszeichen:

1 Gasmessgerät
2 Lichtquelle für infrarote Strahlung
4, BP1, BP2, BP3 Bandpassfilter
BP1, BP2, BP3, Durchlassbereiche der Bandpassfilter
6, Fabry-Perot-Filter
7, zweites Fabry-Perot-Filter
FP1, FP2, FP3, Wellenlängenbereiche der Fabry-Perot-Filter
8 dichroitischer Strahlteiler
10 optischer Pulsformer
12 Photoakustische Messzelle
14 Gaseinlass
16 Gasauslass
18 Umlenkmittel
19 Umlenkspiegel
20 Interferometer
22 Optik
24 Schwingbalken
A Position Dunkelstellung zweite Ordnung
A' Positon Dunkelstellung erste Ordnung
B, C, D, E, F, G, H Spektralpositionen

## Patentansprüche

1. Gasmessgerät zur Messung der Konzentration mehrerer Gaskomponenten mittels Absorptionsmessung mit einer Lichtquelle (2) für infrarote Strahlung, einer Optik (22) zur Bündelung des Lichts der Lichtquelle (2), einem Bandpassfilter (4) und einer photoakustischen Messzelle (12) zur Messung von Gaskonzentrationen,
**dadurch gekennzeichnet,**
**dass** zur Selektion der Absorptionsspektren zusätzlich zu dem Bandpassfilter (4) zwischen dem Bandpassfilter (4) und der photoakustischen Messzelle (12) ein Fabry-Perot-Filter (6) vor der photoakustischen Messzelle (12) vorgesehen ist, wobei durch das Fabry-Perot-Filter (6) die transmittierte Wellenlänge des Lichtstrahles veränderlich einstellbar ist, so dass die photoakustische Messzelle (12) mit Licht veränderlicher Wellenlänge beaufschlagbar ist, wodurch unterschiedliche Absorptionsspektren von unterschiedlichen Gasen eines Gasgemisches nacheinander einstellbar sind und die spektralen Wellenlängen, bei denen die verschiedenen Gase eine Absorption aufweisen, kontinuierlich durchstimmbar sind, wobei die photoakustische Messzelle (12) ein Schwingbalken (24) und ein Interferometer (20) zur Messung der Auslenkung des Schwingbalkens (24) aufweist und zwischen der Lichtquelle (2) und der photoakustischen Messzelle (12) ein optischer Pulsformer (10) vorgesehen ist, wobei zwischen der Lichtquelle (2) und der photoakustischen Messzelle (12f) ein dichroitischer Strahlteiler (8) angeordnet ist, wobei ein erster Lichtanteil, welcher durch den Strahlteiler (8) fällt, direkt in die photoakustische Messzelle (12) fällt und der reflektierte Lichtanteil des Strahlteilers (8) über Umlenkmittel (18) in die photoakustische Messzelle (12) geführt ist.

2. Gasmessgerät nach Anspruch 1, **dadurch gekennzeichnet, dass** der optische Pulsformer (10) durch das Fabry-Perot-Filter (6) gebildet ist.

3. Gasmessgerät nach Anspruch 2, **dadurch gekennzeichnet, dass** zwischen einem Umlenkmittel (18) und der photoakustischen Messzelle (12) ein zweites Fabry-Perot-Filter (7) angeordnet ist.

## Claims

1. A gas measurement device for measuring the concentration of a plurality of gas components by means of absorption measurement, the device comprising a light source (2) for infrared radiation, an optics (22) for bundling the light of the light source (2), a band pass filter (4) and a photoacoustic measurement cell (12) for measuring gas concentrations, **characterized in that**, that for selecting the absorption spectra, additional to the band pass filter (4) between the band pass filter (4) and the photoacoustic measurement cell (12) a Fabry-Perot filter (6) is arranged in front of the photoacoustic measurement cell (12) whereby the transmitted wavelength of the light beam can be set variably by the use of the Fabry-Perot filter so that the photoacoustic measurement cell (12) can be acted on by light of changing wavelength, whereby different absorption spectra of different gases of a gas mixture can be set after one another and the spectral wavelengths at which the different gases have an absorption can also be determined continuously wherein the photoacoustic measurement cell (12) has a vibrating beam (24) and an interferometer (20) for measuring the deflection of the vibrating beam (24) and an optical pulse shaper (10) is arranged between the light source (2) and the photoacoustic measurement cell (12), further comprising a dichroitic beam splitter (8) arranged between the light source (2) and the photoacoustic measurement cell (12f), wherein a first light portion which is incident through the beam splitter (8) is directly incident into the photoacoustic measurement cell (12) and the reflected light portion of the beam splitter (8) is conducted via deflection means (18) into the photoacoustic measurement cell (12) .

2. The gas measurement device in accordance with claim 1, wherein the optical pulse shaper (10) is formed by the Fabry-Perot filter (6).

3. The gas measurement device in accordance with claim 2, further comprising a second Fabry-Perot filter (7) arranged between a deflection means (18) and the photoacoustic measurement cell (12).

## Revendications

1. Appareil de mesure de gaz pour la mesure de la concentration de plusieurs composantes gazeuses au moyen d'une mesure par absorption, comprenant une source de lumière (2) pour un rayonnement infrarouge, une optique (22) pour focaliser la lumière de la source de lumière (2), un filtre passe-bande (4) et une cellule de mesure photoacoustique (12) pour la mesure de concentration de gaz, **caractérisé en ce que**
pour la sélection des spectres d'absorption il est prévu, en supplément au filtre passe-bande (4), entre le filtre passe-bande (4) et la cellule de mesure photoacoustique (12), un filtre de Fabry-Perot (6) avant la cellule de mesure photoacoustique (12), dans lequel au moyen du filtre de Fabry-Perot (6) la longueur d'onde transmise du rayon de lumière est réglable de manière variable, de sorte que la cellule de mesure photoacoustique (12) peut être attaquée avec de la lumière ayant des longueurs d'onde variables, grâce à quoi il est possible de régler les uns après les autres des spectres d'absorption différents de gaz différents d'un mélange de gaz, et les longueurs d'onde spectrales pour lesquelles les gaz différents présentent une absorption, peuvent être accordées en continu, dans lequel la cellule de mesure photoacoustique (12) comprend un barreau oscillant (24) et un interféromètre (20) pour la mesure de la déviation du barreau oscillant (24), et il est prévu un formateur d'impulsion optique (10) entre la source de lumière (2) et la cellule de mesure photoacoustique (12) subdiviseur de rayon dichroïque (8) est agencé entre la source de lumière (2) et la cellule de mesure photoacoustique (12), dans lequel une première part de lumière, qui tombe à travers le subdiviseur de rayon (8), tombe directement dans la cellule de mesure photoacoustique (12f), et la part de lumière réfléchie du subdiviseur de rayon (8) est menée jusque dans la cellule de mesure photoacoustique (12) via des moyens de renvoi (18).

2. Appareil de mesure de gaz selon la revendication 1, **caractérisé en ce que** le formateur d'impulsion optique (10) est formé par le filtre de Fabry-Perot (6).

3. Appareil de mesure de gaz selon la revendication 2, **caractérisé en ce qu'**un second filtre de Fabry-Perot (7) est agencé entre un moyen de renvoi (18) et la cellule de mesure photoacoustique (12).
